# EUROPÄISCHE PATENTSCHRIFT

(11) **EP 2 052 895 B1**
(45) Veröffentlichungstag und Bekanntmachung des Hinweises auf die Patenterteilung: **12.10.2011**
(21) Anmeldenummer: 08001003.6
(22) Anmeldetag: 19.01.2008
(51) Int. Cl.: B60J 1/20

(54) **Rollo, insbesondere für Fahrzeuge**
Roller blind, in particular for vehicles
Store, en particulier pour véhicules

(30) Priorität: 22.10.2007 DE 202007014982 U
(43) Veröffentlichungstag der Anmeldung: 29.04.2009
(73) Patentinhaber: B & T Exact GmbH, 58285 Gevelsberg (DE)
(72) Erfinder: Tepel, Rolf Guido, 58256 Ennepetal (DE); Brus, Uwe, 42551 Velbert (DE); Teunissen, Christian, 58239 Schwerte (DE); Hüttmann, Oliver, 42389 Wuppertal (DE)
(74) Vertreter: Behrendt, Arne

(56) Entgegenhaltungen:
- EP-A- 1 541 419
- DE-A1- 10 144 523
- DE-A1-102006 000 878
- DE-C1- 10 102 799
- DE-U1- 20 310 943
- FR-A- 2 806 352

## Beschreibung

Die Erfindung betrifft ein Rollo, insbesondere ein Fahrzeugrollo, mit zumindest
- einer in einem Rollokasten drehbar gelagerten Rollowelle,
- einer an der Rollowelle befestigten und auf der Rollowelle aufwickelbaren Rollobahn,
- einer an der Rollobahn befestigten Griffleiste, welcher sich vorzugsweise über die gesamte Rollobreite oder im Wesentlichen die gesamte Rollobreite erstreckt.

Ein solches Rollo wird als Fahrzeugrollo vorzugsweise in Fahrzeugen, zum Beispiel Nutzfahrzeugen, wie zum Beispiel Bussen, Lkw, Kabinen- und Baufahrzeugen oder auch in Pkw oder in Schienenfahrzeugen eingesetzt. Im Innern der Rollowelle ist eine Spannfeder angeordnet, welche im Zuge des Abwickelns der Rollobahn gespannt und im Zuge des Aufwickelns der Rollobahn entspannt wird. Die Erfindung umfasst dabei Ausführungsformen eines Rollos als Springrollo mit oder ohne seitlichen Führungen. Bevorzugt ist ein solches Rollo als Scherenrollo ausgebildet, welches ein oder mehrere Schwenkarme aufweist, die einerseits an die Rollohalterung, nämlich den Rollokasten und andererseits an die Griffleiste schwenkbar angeschlossen sind, wobei ein Schwenkarm eine Schwenkstange oder mehrere schwenkbar miteinander verbundene Schwenkstangen aufweist und die Rollobahn in einer gewünschten Abwickelposition hält. Das Rolle wird folglich gegen die Kraft der Spannfeder abgewickelt, wobei die Schwenkgelenke über Nieten oder Schrauben derart eingestellt werden, dass die Reibungskraft im Bereich der Gelenke größer ist als die Federkraft, sodass die Rollobahn stets in der gewünschten Abwickelposition verharrt. Zum Öffnen des Rollos wird die Griffleiste unter Einschwenken der Schwenkarme hochgeschoben, wobei die Feder diesen Vorgang unterstützt und in erster Linie für ein ordnungsgemäßes Aufwickeln der Rollobahn auf der Rollowelle sorgt.

Ein derartiges Rollo ist beispielsweise aus der DE 20 2006 008 039 U1 bekannt. Solche Rollos haben sich in der Praxis grundsätzlich bewährt, sie sind jedoch weiterentwicklungsfähig.

DE 101 44 523 A1 offenbart ein Rollo bzw. eine Abdeckung zum Auf- und Abwickeln einer Tuch-, Folien- oder Netzbahn, welche an einem Fenster oder Gepäckraum angeordnet ist. Die Bahn ist mit ihrem ersten Ende an einer Wickelwelle und mit ihrem zweiten Ende an einer Auszugstange befestigt. Die Auszugstange weist einen als auf das Hohlprofil ausgebildeten Bahnhalter auf, welcher mit Kunststoff umspritzt ist und wobei der Kunststoff einen Anschlag der Auszugstange für das Rollo im eingerollten Zustand bildet.

Dokument DE 101 02 799 beschreibt ein Rollo gemäß dem Oberbegriff des Anspruchs 1.

Der Erfindung liegt die Aufgabe zugrunde, ein Rollo der eingangs beschriebenen Art zu schaffen, welches bei einfachem und kostengünstigen Aufbau und eine einfache und möglichst geräuscharme Handhabung gewährleistet.

Zur Lösung dieser Aufgabe lehrt die Erfindung bei einem gattungsgemäßen Rollo der eingangs beschriebenen Art insbesondere Fahrzeugrollo, dass die Griffleiste ein oder mehrere Führungselemente aufweist, welche bei aufgewickelter Rollobahn, das heißt in der oberen Endposition, in korrespondierende Führungsaufnahmen an oder in dem Rollokasten eingreifen oder dass umgekehrt in oder an dem Rollokasten Führungselemente angeordnet sind, welche in der oberen Endposition in korrespondierende Führungsaufnahmen in oder an der Griffleiste eingreifen. Die Führungselemente sind dabei vorzugsweise als Rastelemente und/oder Klemmelemente und die korrespondierenden Führungsaufnahmen vorzugsweise als Rastaufnahmen und/oder Klemmaufnahmen ausgebildet. Dabei ist es zweckmäßig, wenn an der Griffleiste (jeweils endseitig) ein Führungselement (bzw. eine Führungsaufnahme) angeordnet ist, während in dem Rollokasten in den seitlichen Endbereichen zum Beispiel an endseitigen Abschlusskappen bzw. Endkappen oder auch sonstigen Stirnseiten des Rollokastens korrespondierende Führungsaufnahmen angeordnet sind.

Die Erfindung geht von der Erkenntnis aus, dass sich die Handhabung eines Rollos, zum Beispiel eines Scherenrollos, verbessern lässt und zugleich störende Geräusche in der oberen Endposition vermieden werden, wenn das Rollo in der oberen Endposition durch Zusammenwirken der Führungselemente und Führungsaufnahmen gesichert wird. Dieses betrifft zunächst einmal eine Sicherung quer zur Rollofläche, das heißt in der oberen Endposition wird eine Bewegung der Rollobahn und der daran angeschlossenen Griffleiste quer zur Rollofläche verhindert. Rollofläche meint dabei die von der abgewickelten Rollobahn gebildete Fläche. Ergänzend zu einer derartigen Sicherung quer zur Rollofläche wird darüber hinaus aber auch eine Sicherung entlang der Rollofläche bzw. in auf- und Abwickelrichtung erreicht, wenn die Führungselemente zum Beispiel als Rastelemente und/oder Klemmelemente ausgebildet sind. Auf diese Weise lässt es sich einrichten, dass die Griffleiste ist der oberen Endposition gleichsam in diese Endposition einrastet, sodass ein optimaler Fang der Griffleiste in die obere Endposition gewährleistet ist. Schwingungen und damit auch Geräuschbildungen durch derartige Schwingungen, zum Beispiel ein Klappern der Griffleiste in dem Rollokasten, werden zuverlässig vermieden. Dieses ist besonders dann vorteilhaft, wenn ein solches Rollo "dynamisch" genutzt wird, zum Beispiel in Fahrzeugen oder dergleichen.

Eine besonders vorteilhafte Sicherung der Griffleiste in der oberen Endposition lässt sich erreichen, wenn die Führungselemente als im Querschnitt profilierte Führungselemente ausgebildet sind, welche entlang der Eintauchtiefe bzw. Einstecktiefe oder Einsteckrichtung unterschiedliche Dickenbereiche aufweisen. Dementsprechend können die Führungsaufnahmen als Aufnahmetaschen ausgebildet sein, welche entlang der Einstecktiefe unterschiedliche Aufnahmebreiten aufweisen. Auf diese Weise lässt sich eine rastende Verbindung bzw. eine rastende Fixierung der Führungselemente innerhalb der Führungsaufnahmen erreichen. Dazu können die Führungselemente eine sich in Einsteckrichtung verjüngenden Querschnitt bzw. Dicke aufweisen, wobei sich in Einsteckrichtung an den verjüngten Bereich ein oder mehrere Rastbereiche mit vergrößertem Querschnitt bzw. Dicke anschließen.

Die Aufnahmetasche kann dabei von beidseitig der Führungselemente angeordneten Führungsstegen oder Führungsnocken gebildet werden, welche mit den Führungselementen zusammenwirken. In diesem Zusammenhang kann es zweckmäßig sein, beidseitig der Führungselemente jeweils ein oder mehrere Führungsstege anzuordnen, wobei der Abstand der Führungsstege in Einsteckrichtung unterschiedlich groß ist, sodass im Zusammenwirken mit den Führungselementen die beschriebene Rastverbindung entsteht.

Die beschriebene Führung der Griffleiste innerhalb des Rollokastens ist besonders zweckmäßig im Zusammenhang mit Scherenrollos, wobei dort das Bedürfnis besteht, Scherenrollos mit besonders kompaktem und insbesondere flachen Aufbau zu realisieren. In diesem Zusammenhang schlägt die Erfindung in bevorzugter Weiterbildung vor, dass der Schwenkarm bzw. die Schwenkarme im Innern des Rollokastens an den Rollokasten angeschlossen sind und/oder dass der Rollokasten in der oberen Endposition der Rollobahn bzw. der Griffleiste die Schwenkarme vollständig oder im Wesentlichen vollständig aufnimmt. Die Erfindung schlägt folglich eine geschlossene Bauweise vor, bei welcher die Schwenkarme nicht mehr außenseitig an den Rollokasten angeschlossen sind, sondern wobei die Schwenkgelenke im Innern des Rollokastens angeordnet sind. Im montierten Zustand sind die Schwenkgelenke, mit denen die Schwenkarme an den Rollokasten angeschlossen sind, folglich unterhalb der Rollowelle im Innern des Kastens positioniert. Der erfindungsgemäße Rollokasten zeichnet sich folglich durch eine flache Bauweise aus. Insbesondere im Zusammenhang mit dieser flachen Bauweise kommt der eingangs beschriebenen Führung besondere Bedeutung zu, da bei besonders flacher Bauweise Geräuschbildungen durch Klappern oder dergleichen besonders problematisch sind.

Es liegt ferner im Rahmen der Erfindung, dass der Rollokasten in der oberen Endposition der Griffleiste vollständig oder im Wesentlichen vollständig von der Griffleiste verschlossen wird.

Im Folgenden wird die Erfindung anhand einer lediglich ein Ausführungsbeispiel darstellenden Zeichnung näher erläutert. Es zeigen:

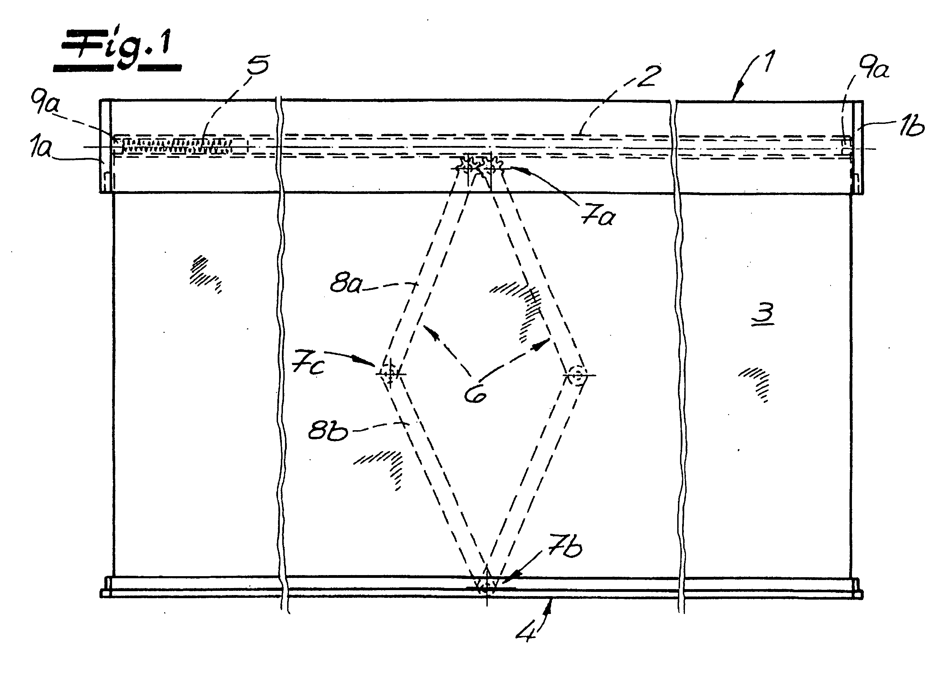

- Fig. 1: Ein Rollo in der Ausführungsform als Scherenrollo in einer vereinfachten Draufsicht,
- Fig. 2: einen Querschnitt durch den Gegenstand nach Fig. 1 in der oberen Endposition,
- Fig.3: einen Ausschnitt aus dem Gegenstand nach Fig. 1 in einer perspektivischen Ansicht und
- Fig. 4: eine Endkappe bzw. Abschlusskappe des Rollokastens in einer perspektivischen Ansicht.

In den Figuren ist ein Rollo in der Ausführungsform als Scherenrollo für ein Fahrzeug, zum Beispiel für ein Fenster eines Lkw dargestellt. Dieses Rollo besteht in seinem grundsätzlichen Aufbau aus einer in einem Rollokasten 1 drehbar gelagerten Rollowelle 2, einer an der Rollowelle 2 befestigten und auf der Rollowelle 2 aufwickelbaren Rollobahn 3 und einer an der Rollobahn 3 befestigten Griffleiste 4, welche sich über die gesamte Rollobreite erstreckt. Im Innern der Rollowelle 4 ist eine Spannfeder 5 angeordnet, welche zwischen Rollowelle 2 einerseits und Rollokasten 1 andererseits arbeitet und im Zuge des Abwickelns der Rollobahn 3 gespannt sowie im Zuge des Aufwickelns der Rollobahn 3 entspannt wird. Das Rollo weist im Ausführungsbeispiel zwei Schwenkarme 6 auf, welche jeweils einerseits unter Bildung eines ersten Gelenkes 7a an den Rollokasten 1 und andrerseits unter Bildung eines zweiten Gelenkes 7b an die Griffleiste 4 schwenkbar angelenkt sind. Diese als Gelenkarme 6 ausgebildeten Schwenkarme bestehen jeweils aus zwei Schenkstangen 8a, 8b, die unter Bildung eines dritten Gelenkes 7c schwenkbar miteinander verbunden sind, und zwar mittels Befestigungsmitteln bzw. Verbindungsmitteln, zum Beispiel Schrauben oder Nieten, welche die Gelenke bilden. Im Bereich der Gelenke können Reibelemente, zum Beispiel Reibscheiben aus Kunststoff angeordnet sein, so wie dies beispielsweise in der DE 20 2006 008 039 U1 beschrieben ist. Das Rollo wird gegen die Kraft der Spannfeder 5 abgewickelt, wobei die Schwenkgelenke 7a, 7b, 7c über die Nieten oder Schrauben unter Berücksichtigung zum Beispiel der Reibscheiben derart eingestellt sind, dass die Reibungskraft im Bereich der Gelenke größer ist als die Federkraft, sodass die Rollobahn stets in der gewünschten Abwickelposition verharrt. Zum Öffnen des Rollos wird die Griffleiste 4 unter Einschwenken der Schwenkarme 6 hochgeschoben, wobei die Feder 5 diesen Vorgang unterstützt und in erster Linie für ein ordnungsgemäßes Aufwickeln der Rollobahn 3 auf der Rollowelle 2 sorgt.

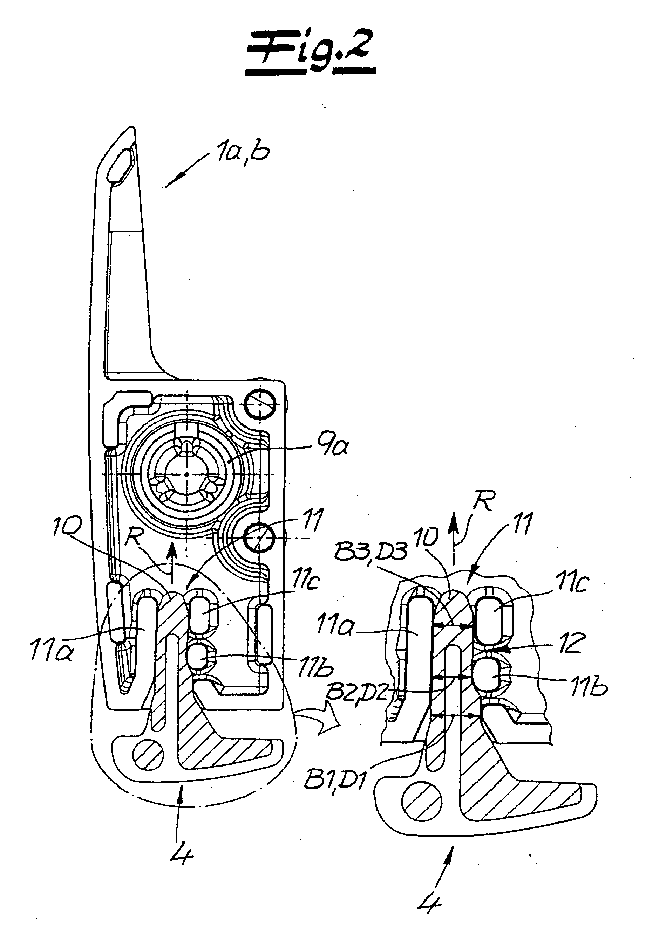

Erfindungsgemäß weist die Griffleiste nun an Ihren beiden seitlichen Enden jeweils ein Führungselement 10 auf, wobei diese Führungselemente 10 bei aufgewickelter Rollobahn 3 und folglich in der oberen Endposition (vgl. Fig. 2) in korrespondierende Führungsaufnahmen 11 in dem Rollokasten 1 eingreifen. Der Rollokasten 1 weist dabei im Ausführungsbeispiel in seinen beiden seitlichen Endbereichen Abschlusskappen bzw. Endkappen 1 a, 1 b auf, welche die Stirnflächen des Rollokastens 1 bilden. Die beschriebenen Führungsaufnahmen 11 sind im Ausführungsbeispiel im Bereich der Stirnflächen und folglich an den Endkappen angeordnet.

Eine vergleichende Betrachtung der Figuren macht deutlich, dass die Führungselemente 10 der Griffleiste 4 im Zusammenwirken mit den Führungsaufnahmen 11 des Rollokastens 1 einen optimalen Fang der Griffleiste 4 in bzw. am Rollokasten 1 gewährleisten. Denn im Zuge des Hochschiebens der Griffleiste 4 und folglich im Zuge des Aufwickelns der Rollobahn 3 greifen die beiden Führungselemente 10 in die dafür vorgesehenen Führungsaufnahmen 11 am Rollokasten 1 ein, sodass die Griffleiste 4 in der oberen Endposition festgehalten wird und folglich Geräuschbildung durch Klappern oder dergleichen zuverlässig vermieden wird. Dieses ist insbesondere dann vorteilhaft, wenn das Rollo "dynamisch" eingesetzt wird, zum Beispiel in einem Fahrzeug.

Die Führungselemente 10 sind im Ausführungsbeispiel als Rastelemente und die korrespondierenden Führungsaufnahmen 11 als Rastaufnahmen ausgebildet. Dazu sind die Führungselemente 10 als im Querschnitt profilierte Führungselemente ausgebildet, welche entlang der Einstecktiefe bzw. Einsteckrichtung R unterschiedliche Dickenbereiche D1, D2, D3 aufweisen. Die Führungsaufnahmen 11 können als Aufnahmetaschen ausgebildet sein und ebenfalls entlang der Einstecktiefe bzw. Einsteckrichtung R unterschiedliche Aufnahmebreiten B1, B2, B3 aufweisen. Durch entsprechende Abstimmung der Dickenbereiche der Führungselemente 10 und der Aufnahmebreiten der Aufnahmetaschen 11 lässt sich eine geeignete Rastverbindung realisieren, welche nicht nur Bewegungen der Griffleiste 4 quer zur Rollofläche unterbindet, sondern insbesondere auch eine Endposition der Griffleiste im Sinne einer Rastverbindung definiert.

Im Ausführungsbeispiel weisen die Führungselemente 10 einen sich in Einsteckrichtung R verjüngenden Querschnitt bzw. verringernde Dicke auf, wobei sich in Einsteckrichtung an den verjüngten Bereich (D2) ein Rastbereich mit vergrößertem Querschnitt bzw. vergrößerter Dicke (D3) anschließt. Die Kontur der Führungsaufnahmen bzw. der Aufnahmetaschen 11 ist entsprechend an die Kontur dieser Führungselemente 10 angepasst. Dazu sind die Aufnahmetaschen im Ausführungsbeispiel von beidseitig der Rastelemente 10 angeordneten Führungsstegen 11a und/oder Führungsnocken 11 b, 11 c gebildet. Beidseitig der Führungselemente 10 sind jeweils ein oder mehrere Führungsstege 11a bzw. Führungsnocken 11b, 11 c angeordnet, wobei der Abstand B2, B3 der gegenüberliegenden Führungsstege bzw. Führungsnocken unterschiedlich groß ist bzw. variiert. Dazu wird insbesondere auf Fig. 2 verwiesen. Es ist erkennbar, dass auf der einen Seite des Führungselementes 10 ein Führungssteg 11a angeordnet ist, welcher sich im wesentlichen über die gesamte Einstecktiefe erstreckt. Gegenüberliegend sind auf der anderen Seite des Führungselementes 10 zwei separate Führungsstege bzw. Führungsnocken 11 b, 11 c angeordnet, und zwar jeweils in einem unterschiedlichen Abstand B2, B3 zu dem Führungssteg 11a. Auf diese Weise entsteht gleichsam eine Aufnahmetasche mit einer geeigneten Kontur, welche mit der Kontur bzw. den unterschiedlichen Dickenbereichen des Führungselementes zusammenwirkt, in dem der Rastbereich 12 mit vergrößerter Dicke D3 in Einsteckrichtung hinter den Nocken 11 b gelangt, welcher mit einem geringeren Abstand B2 zu dem Führungssteg 11a angeordnet ist als der dahinterliegende Nocken 11 c.

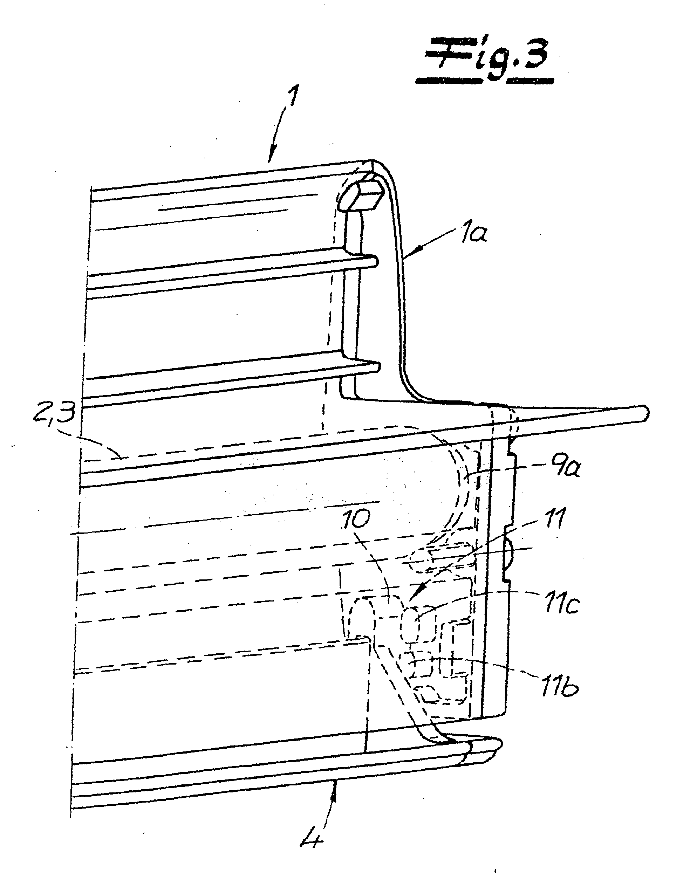

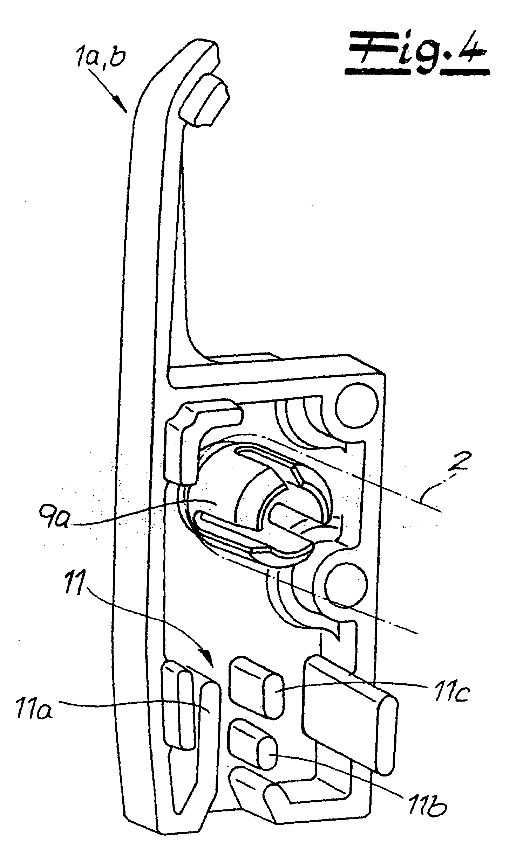

In den Fig. 2 und 3 ist dabei erkennbar, dass die Endkappe bzw. die Endkappen 1 a, 1 b als einstückig ausgebildete Kunststoffformteile gefertigt sind, das heißt die Führungsaufnahmen 11 bzw. die Führungsstege 11a und/oder Führungsnocken 11 b, c sind einstückig an die Endkappen 1 a, 1b angeformt. Ferner ist in den Figuren 3 und 4 erkennbar, dass an die Endkappen 1 a, 1b darüber hinaus Lagerzapfen 9a angeformt sein können, auf welchen die Rollowelle 2 drehbar gelagert ist.

Im Übrigen ist im Rahmen der Erfindung vorgesehen, dass die Schwenkarme 6 des Scherenrollos bzw. im Innern des Rollokastens 1 angelenkt sind, das heißt die Schwenkgelenke 7a sind in den Rollokasten 1 integriert und (in Einbauposition) (unmittelbar) unterhalb der Rollowelle 2 angeordnet. Ferner ist dabei vorgesehen, dass der Rollokasten 1 in der oberen Endposition der Rollobahn 3 die Schwenkarme 6 vollständig aufnimmt, sodass insgesamt eine kompakte und geschlossene Bauweise realisiert ist. Dabei ist es besonders zweckmäßig wenn der Rollokasten 1 in der oberen Endposition von der Griffleiste 4 im Wesentlichen vollständig verschlossen wird.

Die Figuren zeigen eine bevorzugte Ausführungsform eines erfindungsgemäßen Rollos als Scherenrollo. Die Erfindung umfasst jedoch auch Rollos anderer Ausgestaltungen, zum Beispiel Springrollos mit und ohne Führung.

## Patentansprüche

1. Rollo, insbesondere für Fahrzeuge, mit zumindest
- einer in einem Rollokasten (1) drehbar gelagerten Rollowelle (2),
- einer an der Rollowelle (2) befestigten und auf der Rollowelle (2) aufwickelbaren Rollobahn (3),
- einer an der Rollobahn (3) befestigten Griffleiste (4), welche sich vorzugsweise über die gesamte Rollobreite erstreckt,
wobei die Griffleiste (4) ein oder mehrere Führungselemente (10) aufweist, welche bei aufgewickelter Rollobahn (3) in korrespondierende Führungsaufnahmen (11) an oder in dem Rollokasten (1) eingreifen oder dass umgekehrt in oder an dem Rollokasten (1) Führungselemente (10) angeordnet sind, welche in korrespondierende Führungsaufnahmen (11) an oder in der Griffleiste (4) eingreifen,
wobei die Führungselemente (10) als Rastelemente und/oder Klemmelemente und die korrespondierenden Führungsaufnahmen (11) als Rastaufnahmen und/oder Klemmaufnahmen ausgebildet sind, **dadurch gekennzeichnet, dass** die Führungselemente (10)**dadurch gekennzeichnet, dass** als im Querschnitt profilierte Führungselemente (10) ausgebildet sind, welche entlang der Einstecktiefe (R) unterschiedliche Dickenbereiche (D1, D2, D3) aufweisen und wobei die Führungselemente (10) einen sich in Einsteckrichtung (R) verjüngenden Querschnitt aufweisen, wobei sich in Einsteckrichtung (R) an den verjüngten Bereich (D2) ein oder mehrere Rastbereiche mit vergrößertem Querschnitt (D3) anschließen.

2. Rollo nach Anspruch 1, **dadurch gekennzeichnet, dass** die Führungsaufnahmen (11) als Aufnahmetaschen ausgebildet sind, welche entlang der Einstecktiefe (R) unterschiedliche Aufnahmebreiten (B1, B2, B3) aufweisen.

3. Rollo nach Anspruch 2, **dadurch gekennzeichnet, dass** die Aufnahmetasche (11) von beidseitig der Führungselemente (10) angeordneten Führungsstegen (11a) und/oder Führungsnocken (11 b, 11 c) gebildet wird.

4. Rollo nach Anspruch 4, **dadurch gekennzeichnet, dass** beidseitig der Führungselemente (10) jeweils einer oder mehrere Führungsstege (11a) oder Führungsnocken (11b, 11c) angeordnet sind, wobei der die Aufnahmetasche (11) bildende Abstand der Führungsstege (11a) oder Führungsnocken (11b, 11 c) in Einsteckrichtung (R) zur Bildung unterschiedlicher Aufnahmebreiten (B2, B3) unterschiedlich groß ist.

5. Rollo nach einem der Ansprüche 1 bis 4 in der Ausführungsform als Scherenrollo, mit zumindest einem einerseits an den Rollokasten (1) und andererseits an die Griffleiste (4) schwenkbar angeschlossenen Schwenkarm (6), welcher eine Schwenkstange oder mehrere schwenkbar miteinander verbundene Schwenkstangen (8a, 8b) aufweist und die Rollobahn (3) in einer gewünschten Abwickelposition hält, **dadurch gekennzeichnet, dass** der Schwenkarm bzw. die Schwenkarme (8a, 8b) mittels Schwenkgelenken (7a, 7b, 7c) im Inneren des Rollokastens (1) an den Rollokasten (1) angeschlossen sind und/oder dass der Rollokasten (1) im aufgewickelten Zustand der Rollobahn (3) den oder die Schwenkarme (8a, 8b) vollständig oder im Wesentlichen vollständig aufnimmt.

6. Rollo nach Anspruch 5, **dadurch gekennzeichnet, dass** der Rollokasten (1) im aufgewickelten Zustand der Rollobahn (3) von der sich über die gesamte Rollobreite erstreckenden Griffleiste (4) im Wesentlichen vollständig verschlossen wird.

7. Rollo nach einem der Ansprüche 1 bis 6, **dadurch gekennzeichnet, dass** die Führungsaufnahmen (11) (oder Führungselemente) einstückig an den Rollokasten (1) angeschlossen sind, zum Beispiel einstückig an Abschlusskappen (1a. 1 b) aus Kunststoff angeformt sind.

## Claims

1. A roller blind, in particular for vehicles, comprising at least
- a roller blind shaft (2) mounted rotatably in a roller blind case (1),
- a roller blind web (3) which is fixed to the roller blind shaft (2) and which can be rolled up on the roller blind shaft (2), and
- a gripping bar (4) which is fixed to the roller blind web (3) and which preferably extends over the entire roller blind width,
wherein the gripping bar (4) has one or more guide elements (10) which when the roller blind web (3) is rolled up engaged into corresponding guide receiving means (11) on or in the roller blind case (1) or conversely arranged in or on the roller blind case (1) are guide elements (10) which engage into corresponding guide receiving means (11) on or in the gripping bar (4),
wherein the guide elements (10) are in the form of latching elements and/or clamping elements and the corresponding guide receiving means (11) are in the form of latching receiving means and/or clamping receiving means,
**characterised in that**
the guide elements (10) are in the form of guide elements (10) which are profiled in cross-section and which have different thickness regions (D1, D2, D3) along the insertion depth (R) and wherein the guide elements (10) are of a cross-section which narrows in the insertion direction (R), wherein one or more latching regions of enlarged cross-section (D3) adjoin the narrowed region (D2) in the insertion direction (R).

2. A roller blind according to claim 1 **characterised in that** the guide receiving means (11) are in the form of receiving pockets which have different receiving widths (B1, B2, B3) along the insertion depth (R).

3. A roller blind according to claim 2 **characterised in that** the receiving pockets (11) are formed by guide projections (11b, 11c) and/or guide limbs (11a) arranged on both sides of the guide elements (10).

4. A roller blind according to claim 3 **characterised in that** one or more guide limbs (11a) or guide projections (11b, 11c) are respectively arranged on both sides of the guide elements (10), wherein the spacing of the guide limbs (11a) or guide projections (11b, 11c) in the insertion direction (R), which spacing forms the receiving pocket (11), is of differing size to form different receiving widths (B2, B3).

5. A roller blind according to one of claims 1 to 4 in the configuration of a scissor roller blind, comprising at least one pivotal arm (6) which is connected pivotably on the one hand to the roller blind case (1) and on the other hand to the gripping bar (4) and which has a pivotal bar or a plurality of pivotably interconnected pivotal bars (11a, 11b) and holds the roller blind web (3) in a desired unrolled position, **characterised in that** the pivotal arm or pivotal arms (8a, 8b) are connected to the roller blind case (1) by means of pivot joints (7a, 7b, 7c) in the interior of the roller blind case (1) and/or the roller blind case (1) completely or substantially completely receives the pivotal arm or arms (8a, 8b) in the rolled-up condition of the roller blind web (3).

6. A roller blind according to claim 5 **characterised in that** in the rolled-up condition of the roller blind web (3) the roller blind case (1) is substantially completely closed by the gripping bar (4) which extends over the entire roller blind width.

7. A roller blind according to one of claims 1 to 6 **characterised in that** the guide receiving means (11) (or guide elements) are integrally connected to the roller blind case (1), for example are formed integrally on closure caps (1a, 1b) of plastic material.

## Revendications

1. Store, en particulier pour des véhicules, avec au moins
- un arbre de store (2) logé d'une manière tournante dans un caisson de store (1),
- une bande de store (3) fixée à l'arbre de store (2) et pouvant être enroulée sur l'arbre de store (2),
- une baguette de prise (4) fixée à la bande de store (3) qui s'étend de préférence sur toute la largeur du store,
où la baguette de préhension (1) présente un ou plusieurs éléments de guidage (10) qui, lorsque la bande de store (3) est enroulée, s'engagent dans des logements de guidage correspondants (11) à ou dans le caisson de store (1), ou en ce que, inversement, dans ou au caisson de store (1), des éléments de guidage (10) sont disposés qui s'engagent dans des logements de guidage correspondants (11) à ou dans la baguette de préhension (4),
où les éléments de guidage (10) sont réalisés comme des éléments d'enclenchement et/ou éléments de serrage et les logements de guidage correspondants (11) comme logements d'enclenchement et/ou logements de serrage, **caractérisé en ce que** les éléments de guidage (10) sont réalisés comme éléments de guidage (10) profilés en section transversale qui présentent le long de la profondeur d'insertion (R) des zones d'épaisseur différentes (D1, D2, D3), et où les éléments de guidage (10) présentent une section transversale diminuant dans la direction d'insertion (R), où font suite dans la direction d'insertion (R) à la zone diminuée (D2) une ou plusieurs zones d'enclenchement d'une section transversale agrandie (D3) .

2. Store selon la revendication 1, **caractérisé en ce que** les logements de guidage (11) sont réalisés comme poches de réception qui présentent le long de la profondeur d'insertion (R) des largeurs de réception différentes (B1, B2, B3).

3. Store selon la revendication 2, **caractérisé en ce que** la poche de réception (11) est formée par des nervures de guidage (11a) et/ou des cames de guidage (11b, 11c) disposées des deux côtés des éléments de guidage (10).

4. Store selon la revendication 4, **caractérisé en ce que**, des deux côtés des éléments de guidage (10), respectivement une ou plusieurs nervures de guidage (11a) ou cames de guidage (11b, 11c) sont disposées, où l'écart formant la poche de réception (11) des nervures de guidage (11a) ou des cames de guidage (11b, 11c), dans la direction d'insertion (R), pour former des largeurs de réception différentes (B2, B3) est de grandeur variable.

5. Store selon l'une des revendications 1 à 4 dans le mode de réalisation comme store de lunette arrière, avec au moins un bras pivotant (6) relié d'une manière pivotante, d'une part, au caisson de store (1) et, d'autre part, à la baguette de préhension (4), qui présente une tige de pivotement ou plusieurs tiges de pivotement (8a, 8b) reliées d'une manière pivotante les unes aux autres, et maintient la bande de store (3) dans une position de déroulement souhaitée, **caractérisé en ce que** le ou les bras de pivotement (8a, 8b) sont reliés par des articulations pivotantes (7a, 7b, 7c) à l'intérieur du caisson de store (1) au caisson de store (1) et/ou **en ce que** le caisson de store (1), à l'état enroulé de la bande de store (3), reçoit le ou les bras pivotants (8a, 8b) complètement ou sensiblement complètement.

6. Store selon la revendication 5, **caractérisé en ce que** le caisson de store (1), à l'état enroulé de la bande de store (3), est fermé sensiblement complètement par la baguette de préhension (4) s'étendant sur toute la largeur du store.

7. Store selon l'une des revendications 1 à 6, **caractérisé en ce que** les logements de guidage (11) (ou éléments de guidage) sont reliés en une pièce au caisson de store (1), par exemple sont rapportés en une pièce à des capuchons de fermeture (1a, 1b) en matériau synthétique.
